# EUROPEAN PATENT SPECIFICATION

(11) **EP 3 493 574 B1**
(45) Date of publication and mention of the grant of the patent: **12.04.2023**
(21) Application number: 16912270.2
(22) Date of filing: 11.08.2016
(51) Int. Cl.: H04W 16/14, H04W 74/08, H04W 72/04, H04W 72/12

(54) **WIRELESS COMMUNICATION METHOD BASED ON UNLICENSED FREQUENCY SPECTRUM, AND BASE STATION AND TERMINAL DEVICE**
DRAHTLOSKOMMUNIKATIONSVERFAHREN AUF BASIS EINES UNLIZENZIERTEN FREQUENZSPEKTRUMS SOWIE BASISSTATION UND ENDGERÄTEVORRICHTUNG
PROCÉDÉ DE COMMUNICATION SANS FIL BASÉ SUR UN SPECTRE DE FRÉQUENCES SANS LICENCE, STATION DE BASE ET DISPOSITIF TERMINAL

(43) Date of publication of application: 05.06.2019
(73) Proprietor: Huawei Technologies Co., Ltd., Longgang District Shenzhen, Guangdong 518129 (CN)
(72) Inventor: YANG, Meiying, Shenzhen Guangdong 518129 (CN); LI, Yuan, Shenzhen Guangdong 518129 (CN); GUAN, Lei, Shenzhen Guangdong 518129 (CN)
(74) Representative: Gill Jennings & Every LLP
(86) International application number: PCT/CN2016/094701
(87) International publication number: WO 2018/027815

(56) References cited:
- CN-A- 105 072 690
- CN-A- 105 636 108
- CN-A- 105 722 097
- US-A1- 2016 164 646
- SAMSUNG: "Discussion on UL LBT alignment", 3GPP DRAFT; R1-164751, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, China; 20160523 - 20160527 14 May 2016 (2016-05-14), XP051096333, Retrieved from the Internet: URL:http://www.3gpp.org/ftp/tsg_ran/WG1_RL 1/TSGR1_85/Docs/ [retrieved on 2016-05-14]
- NOKIA ET AL: "Channel Access for LAA UL", 3GPP DRAFT; R1-164990 CHANNEL ACCESS FOR LAA UL - FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, China; 20160523 - 20160527 13 May 2016 (2016-05-13), XP051090196, Retrieved from the Internet: URL:http://www.3gpp.org/ftp/tsg_ran/WG1_RL 1/TSGR1_85/Docs/ [retrieved on 2016-05-13]
- ERICSSON: "On UL Channel Access Procedures", 3GPP DRAFT; R1-165157, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, China; 20160523 - 20160527 14 May 2016 (2016-05-14), XP051089829, Retrieved from the Internet: URL:http://www.3gpp.org/ftp/tsg_ran/WG1_RL 1/TSGR1_85/Docs/ [retrieved on 2016-05-14]
- LG ELECTRONICS: "LBT schemes in LAA UL", 3GPP DRAFT; R1-162473 UL LBT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, Korea; 20160411 - 20160415 2 April 2016 (2016-04-02), XP051080211, Retrieved from the Internet: URL:http://www.3gpp.org/ftp/tsg_ran/WG1_RL 1/TSGR1_84b/Docs/ [retrieved on 2016-04-02]
- NOKIA et al.: "Channel Access for LAA UL Rl-164990", 3GPPTSG RAN WG1 Meeting #85, 27 May 2016 (2016-05-27), XP051090196,

## Description

### TECHNICAL FIELD

The present invention relates to the field of communications technologies, and more specifically, to an unlicensed spectrum-based wireless communication method, a base station, and a terminal device.

### BACKGROUND

The 3rd Generation Partnership Project (3GPP) has introduced a listen before talk (LBT) mechanism in an licensed-assisted access using LTE (Long Term Evolution, LTE) (LAA-LTE) technology, so that an LTE device and Wireless Fidelity (Wi-Fi) can fairly contend for a resource on an unlicensed band. The listen before talk mechanism is used for sensing and detecting an idle channel by the LTE device on the unlicensed band.

In the prior art, a base station assesses a carrier by using a clear channel assessment (CCA) with random backoff, and when the CCA is successfully performed, the base station may send downlink information to a terminal device in a maximum channel occupancy time (MCOT) (or also called maximum carrier occupancy time) by using the carrier. In addition, the base station may further share some of the MCOT with the terminal device, so that the terminal device can detect the carrier by using a single-slot CCA and transmit uplink information on the carrier. In this way, the terminal device can send the uplink information to the base station by using the carrier. In the prior art, the base station can share, with the terminal device for sending uplink data by the terminal device, only a carrier on which the CCA with random backoff is performed, without sharing another category of carrier. Therefore, carrier utilization is limited.
`SAMSUNG: "Discussion on UL LBT alignment", 3GPP DRAFT; R1-164751, 3RD GENERATION PARTNERSHIP PROJECT (3GPP), vol. RAN WG1, 14 May 2016' discloses a method for aligning multicarrier LBT within one UE. Both 25us one shot LBT and Cat-4 LBT is supported and two types of UL multi-carrier LBT procedure are provided, that is Type A: UE performs Cat-4 LBT on each channel of multi-carrier LBT group, and Type B: UE performs Cat-4 LBT on only one LAA Scell of the multi-carrier LBT group.
`NOKIA ET AL: "Channel Access for LAA UL", 3GPP DRAFT; R1-164990, 3RD GENERATION PARTNERSHIP PROJECT (3GPP), vol. RAN WG1, 14 May 2016' discloses different types of channel access for UE. It mentions that the eNB can acquire a MCOT using Cat-4 LBT for combined DL and UL bursts. In multicarrier UL scenario, there is a mix of Cat-4 and 25us LBT on multiple carriers.
`ERICSSON: "On UL Channel Access Procedures", 3GPP DRAFT; R1-165157, 3RD GENERATION PARTNERSHIP PROJECT (3GPP), vol. RAN WG1, 14 May 2016' discloses proposals on UL channel access procedures, referring to channel occupancy sharing and LBT parameters.
'LG ELECTRONICS: "LBT Schemes in LAA UL", 3GPP DRAFT; R1-162473, 3RD GENERATION PARTNERSHIP PROJECT (3GPP), vol. RAN WG1, 2 April 2016' discloses LBT schemes in LAAUL. It mentions LBT procedure, LBT parameters and multicarrier LBT.

### SUMMARY

The present invention provides an unlicensed spectrum-based wireless communication method, a base station, and a terminal device as defined by the independent claims, so as to better use an unlicensed spectrum resource to perform communication. In particular, the present invention improves utilization of an unlicensed spectrum resource when a base station has multicarrier sharing DL MCOT. The invention is defined by the appended claims. Further embodiments are provided by the dependent claims. Further embodiments of the description not covered by the claims are provided for explanatory purpose only.

According to a first aspect, an unlicensed spectrum-based wireless communication method is provided, including: occupying, by a base station, a first carrier on an unlicensed spectrum by using a first clear channel assessment CCA, where the first CCA is a CCA with random backoff; occupying, by the base station, a second carrier on the unlicensed spectrum by using a second CCA, where the second CCA is a single-slot CCA; wherein a maximum channel occupancy time, MCOT, of the base station on the second carrier is determined as equal to the MCOT on which the base station performs the CCA with random backoff currently on the first carrier; sending, by the base station, first indication information to a terminal device, where the first indication information is used to instruct the terminal device to send uplink information to the base station on the second carrier in the MCOT; and receiving, by the base station on the second carrier in the MCOT, the uplink information from the terminal device.

In the prior art, a base station may share, with a terminal device, only a carrier occupied on an unlicensed spectrum by using a CCA with random backoff, so that the terminal device can send uplink information to the base station on the carrier. However, it is not specified that the base station shares, with the terminal device, a carrier occupied on the unlicensed spectrum by using another CCA, and therefore utilization of the unlicensed spectrum is relatively low. However, in the present invention, the carrier occupied by the base station by using the single-slot CCA is shared with the terminal device, so that the terminal device can also transmit the uplink information by using the carrier. Therefore, utilization of an unlicensed spectrum resource is improved.

With reference to the first aspect, in a first implementation of the first aspect, the first indication information is specifically used to instruct the terminal device to send the uplink information to the base station on the second carrier in a first maximum channel occupancy time MCOT, and the first MCOT is maximum duration in which the base station can occupy the first carrier.

With reference to the first implementation of the first aspect, in a second implementation of the first aspect, the first MCOT is determined based on a contention window of the first CCA and/or a downlink service level corresponding to the first CCA performed by the base station.

With reference to the first implementation of the first aspect, in a second implementation of the first aspect, the first MCOT is determined based on a contention window of the first CCA and/or a downlink service level corresponding to the first CCA performed by the base station.

When sending the uplink information to the base station in the first MCOT, the terminal device may send the uplink information to the base station by using a remaining time, in the first MCOT, other than a time of occupying the first carrier by the base station. In this way, the terminal device can send the uplink information by using the first carrier.

Generally, because it is relatively difficult for the base station to occupy the first carrier by using the first CCA, the first MCOT is usually relatively large. Therefore, the terminal device can have more time to send the uplink information to the base station on the second carrier in the first MCOT, so that the terminal device can better send the uplink information.

With reference to any one of the first aspect, and the first and the second implementations of the first aspect, in a third implementation of the first aspect, the method further includes: sending, by the base station, second indication information to the terminal device, where the second indication information is used to indicate a CCA type of a third CCA performed by the terminal device on the second carrier before the terminal device sends the uplink information, and the CCA type of the third CCA is a CCA with random backoff or a single-slot CCA.

The base station may determine the CCA type of the third CCA depending on an actual status of the carrier, and directly or indirectly notify the terminal device of the CCA type of the third CCA by using the second indication information.

The category of the third CCA can be indicated by using the second indication information, so that the terminal device can perform the third CCA on the first carrier.

With reference to the third implementation of the first aspect, in a fourth implementation of the first aspect, the second indication information carries interval information of the third CCA, and the interval information of the third CCA is used to indicate the CCA type of the third CCA.

The CCA type of the third CCA can be indirectly determined based on a correspondence between CCA intervals and CCA types by using the interval information of the third CCA in the second indication information.

According to a second aspect, an unlicensed spectrum-based wireless communication method is provided, including: determining, by a terminal device, a first carrier and a second carrier that are occupied by a base station on an unlicensed spectrum, where the base station occupies the first carrier by using a first clear channel assessment CCA and occupies the second carrier by using a second CCA, the first CCA is a CCA with random backoff, and the second CCA is a single-slot CCA; wherein a maximum channel occupancy time, MCOT, of the base station on the second carrier is determined as equal to the MCOT on which the base station performs the CCA with random backoff currently on the first carrier; receiving, by the terminal device, first indication information from the base station, where the first indication information is used to instruct the terminal device to send uplink information to the base station on the second carrier; and sending, by the terminal device, the uplink information to the base station on the second carrier in the MCOT; and after receiving the first indication information, sending, by the terminal device, the uplink information to the base station on the second carrier in the MCOT.

In the prior art, a terminal device can share only a carrier occupied by a base station on an unlicensed spectrum by using a CCA with random backoff. In other words, the terminal device can send uplink information to the base station on the carrier. However, in the prior art, it is not specified whether the terminal device can share a carrier occupied by the base station on the unlicensed spectrum by using another CCA. In other words, the terminal device can share, for sending the uplink information, only some carriers occupied by the base station, and therefore utilization of the unlicensed spectrum is relatively low. However, in the present invention, the carrier occupied by the base station by using the single-slot CCA is shared with the terminal device, so that the terminal device can also transmit the uplink information by using the carrier. Therefore, utilization of an unlicensed spectrum resource is improved.

With reference to the second aspect, in a first implementation of the second aspect, the sending, by the terminal device, the uplink information to the base station on the second carrier based on the first indication information includes: sending, by the terminal device, the uplink information to the base station on the second carrier in a first maximum channel occupancy time MCOT, where the first MCOT is maximum duration in which the base station can occupy the first carrier.

With reference to the first implementation of the second aspect, in a second implementation of the second aspect, the first MCOT is determined based on a contention window of the first CCA and/or a downlink service level corresponding to the first CCA performed by the base station.

With reference to any one of the second aspect, and the first and the second implementations of the second aspect, in a third implementation of the second aspect, before the sending, by the terminal device, the uplink information to the base station on the second carrier based on the first indication information, the method further includes: performing, by the terminal device, a third CCA on the second carrier; and the sending, by the terminal device, the uplink information to the base station on the second carrier based on the first indication information includes: when the third CCA is successfully performed, sending, by the terminal device, the uplink information to the base station on the second carrier.

With reference to any one of the second aspect, and the first to the third implementations of the second aspect, in a fourth implementation of the second aspect, the method further includes: receiving, by the terminal device, second indication information from the base station; and determining, by the terminal device, a CCA type of the third CCA based on the second indication information, where the CCA type of the third CCA is a CCA with random backoff or a single-slot CCA.

With reference to the fourth implementation of the second aspect, in a fifth implementation of the second aspect, the second indication information includes CCA interval information of the third CCA, and the determining, by the terminal device, a CCA type of the third CCA based on the second indication information includes: determining, by the terminal device, the CCA type of the third CCA based on a CCA interval of the third CCA and a correspondence between CCA intervals and candidate CCA types, where the candidate CCA types include the CCA with random backoff and the single-slot CCA.

According to a third aspect, an unlicensed spectrum-based wireless communication method is provided, including: determining, by a terminal device, an energy detection threshold of a first carrier on an unlicensed spectrum based on energy detection thresholds of a plurality of carriers on the unlicensed spectrum; performing, by the terminal device, a first CCA on the first carrier based on the energy detection threshold of the first carrier, where the first CCA is a single-slot CCA; and separately performing, by the terminal device, a second CCA on the plurality of carriers based on the energy detection thresholds of the plurality of carriers, where the second CCA is a CCA with random backoff.

In the prior art, when a base station performs CCA detection on a plurality of carriers on an unlicensed spectrum (where the base station performs a CCA with random backoff on a first carrier, and performs a single-slot CCA on another carrier), the base station sets an energy detection threshold of the another carrier to be the same as an energy detection threshold of the first carrier. This manner is not flexible enough because the energy detection threshold of the another carrier needs to be consistent with the energy detection threshold of the first carrier. However, in the present invention, when the terminal device performs CCA detection on the plurality of carriers on the unlicensed spectrum (where the terminal device performs the single-slot CCA on the first carrier, and performs the CCA with random backoff on a plurality of other carriers), the terminal device sets the energy detection threshold of the first carrier based on the energy detection thresholds of the plurality of carriers. The energy detection threshold of the first carrier is set after the energy detection thresholds of the plurality of carriers are comprehensively considered. Therefore, the energy detection threshold of the first carrier can be more properly determined depending on a status of each carrier.

With reference to the third aspect, in a first implementation of the third aspect, the method further includes: determining, by the terminal device depending on results of performing the first CCA and the second CCA, whether to send uplink information on the first carrier and the plurality of carriers.

With reference to the third aspect or the first implementation of the third aspect, in a second implementation of the third aspect, the determining, by a terminal device, an energy detection threshold of a first carrier on an unlicensed spectrum based on energy detection thresholds of a plurality of carriers on the unlicensed spectrum includes: determining, by the terminal device, the energy detection threshold of the first carrier based on an energy detection threshold of a second carrier in the plurality of carriers, where the energy detection threshold of the second carrier is a smallest energy detection threshold in the energy detection thresholds of the plurality of carriers.

Because it is more difficult to occupy the carrier by using the single-slot CCA than to occupy the carrier by using the CCA with random backoff, and a smaller value of the energy detection threshold indicates a greater difficulty in occupying the carrier, for fairness of carrier occupancy, the energy detection threshold of the first carrier may be set with reference to the smallest energy detection threshold.

With reference to the second implementation of the third aspect, in a third implementation of the third aspect, the determining, by the terminal device, the energy detection threshold of the first carrier based on an energy detection threshold of a second carrier in the plurality of carriers includes: determining, by the terminal device, that the energy detection threshold of the first carrier is less than or equal to the energy detection threshold of the second carrier.

The energy detection threshold of the first carrier is set to be less than the energy detection threshold of the second carrier, so that the terminal device can fairly occupy the carriers and can relatively fairly use an unlicensed spectrum resource.

With reference to the third aspect or the first implementation of the third aspect, in a fourth implementation of the third aspect, the determining, by a terminal device, an energy detection threshold of a first carrier on an unlicensed spectrum based on energy detection thresholds of a plurality of carriers on the unlicensed spectrum includes: determining, by the terminal device, the energy detection threshold of the first carrier based on an energy detection threshold of a third carrier in the plurality of carriers, where the third carrier is a carrier that has a largest or smallest index number in the plurality of carriers.

When the energy detection threshold of the first carrier is being set, for convenience, the energy detection threshold of the first carrier may be determined by randomly selecting the energy detection threshold of the carrier that has the largest or smallest index number.

With reference to the fourth implementation of the third aspect, in a fifth implementation of the third aspect, the determining, by the terminal device, the energy detection threshold of the first carrier based on an energy detection threshold of a third carrier in the plurality of carriers includes: determining, by the terminal device, that the energy detection threshold of the first carrier is less than or equal to the energy detection threshold of the third carrier.

Generally, the energy detection threshold of the first carrier is set to be less than the energy detection threshold of the third carrier, so that the terminal device can fairly occupy the carriers and can relatively properly use an unlicensed spectrum resource.

In some implementations, the plurality of carriers include a fourth carrier and a fifth carrier, the fourth carrier and the fifth carrier are two carriers that have smallest energy detection thresholds in the plurality of carriers, and the energy detection threshold of the first carrier is an average value of the energy detection thresholds of the fourth carrier and the fifth carrier.

In some implementations, the energy detection threshold of the first carrier is between an energy detection threshold of the fourth carrier and an energy detection threshold of the fifth carrier, and a difference between the energy detection threshold of the first carrier and the energy detection threshold of the fourth carrier is a preset threshold, or a difference between the energy detection threshold of the fifth carrier and the energy detection threshold of the first carrier is a preset threshold.

In some implementations, the plurality of carriers include a sixth carrier and a seventh carrier, the sixth carrier and the seventh carrier are respectively a carrier that has a largest index number and a carrier that has a smallest index number in the plurality of carriers, and the energy detection threshold of the first carrier is an average value of energy detection thresholds of the sixth carrier and the seventh carrier.

In some implementations, the energy detection threshold of the first carrier is between an energy detection threshold of the sixth carrier and an energy detection threshold of the seventh carrier, and a difference between the energy detection threshold of the first carrier and the energy detection threshold of the sixth carrier is a preset threshold, or a difference between the energy detection threshold of the seventh carrier and the energy detection threshold of the first carrier is a preset threshold.

In some implementations, the energy detection threshold of the first carrier is an average value of the energy detection thresholds of the plurality of carriers.

According to a fourth aspect, a base station is provided, and the base station includes a module configured to perform the method in the first aspect.

According to a fifth aspect, a terminal device is provided, and the terminal device includes a module configured to perform the method in the second aspect.

According to a sixth aspect, a terminal device is provided, and the terminal device includes a module configured to perform the method in the third aspect.

According to a seventh aspect, a base station is provided, and the base station includes a memory, a processor, and a transceiver. The memory is configured to store a program, the processor is configured to execute the program, and when executing the program, the processor performs the method in the first aspect based on the transceiver.

According to an eighth aspect, a terminal device is provided, and the terminal device includes a memory, a processor, and a transceiver. The memory is configured to store a program, the processor is configured to execute the program, and when executing the program, the processor performs the method in the second aspect based on the transceiver.

According to a ninth aspect, a terminal device is provided, and the terminal device includes a memory and a processor. The memory stores a program, the processor is configured to execute the program, and when executing the program, the processor performs the method in the third aspect.

According to a tenth aspect, a computer readable medium is provided, the computer readable medium stores program code to be executed by a base station, and the program code includes an instruction used to perform the method in the first aspect.

According to an eleventh aspect, a computer readable medium is provided, the computer readable medium stores program code to be executed by a terminal device, and the program code includes an instruction used to perform the method in the second aspect.

According to a twelfth aspect, a computer readable medium is provided, the computer readable medium stores program code to be executed by a terminal device, and the program code includes an instruction used to perform the method in the third aspect.

According to a thirteenth aspect, a base station is provided comprising: a processing module, configured to occupy a first carrier on an unlicensed spectrum by using a first clear channel assessment, CCA, wherein the first CCA is a CCA with random backoff, wherein the processing module is further configured to occupy a second carrier on the unlicensed spectrum by using a second CCA, wherein the second CCA is a single-slot CCA; wherein a maximum channel occupancy time, MCOT, of the base station on the second carrier is determined as equal to the MCOT on which the base station performs the CCA with random backoff currently on the first carrier; a sending module, configured to send first indication information to a terminal device, wherein the first indication information is used to instruct the terminal device to send uplink information to the base station on the second carrier in the MCOT; and after the sending module configured to send the first indication information, a receiving module, configured to receive, on the second carrier in the MCOT, the uplink information from the terminal device.

According to a fourteenth aspect, a terminal device is provided comprising: a determining module, configured to determine a first carrier and a second carrier that are occupied by a base station on an unlicensed spectrum, wherein the base station occupies the first carrier by using a first clear channel assessment, CCA, and occupies the second carrier by using a second CCA, the first CCA is a CCA with random backoff, and the second CCA is a single-slot CCA; wherein a maximum channel occupancy time, MCOT, of the base station on the second carrier is determined as equal to the MCOT on which the base station performs the CCA with random backoff currently on the first carrier; a receiving module, configured to receive first indication information from the base station, wherein the first indication information is used to instruct the terminal device to send uplink information to the base station on the second carrier in the MCOT; and after the receiving module configured to receive the first indication information, a sending module, configured to send the uplink information to the base station on the second carrier in the MCOT.

According to fifteenth aspect, a computer program product is provided comprising instructions which, when executed by a computer associated with a base station, cause the base station to carry out the method according to the first aspect.

According to a sixteenth aspect, a computer program product is provided comprising instructions which, when executed by a computer associated with a terminal device, cause the terminal device to carry out the method according to the second aspect.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following descriptions show merely some embodiments of the present invention, and a person of ordinary skill in the art may still derive other drawings from these accompanying drawings without creative efforts.
FIG 1 is a schematic flowchart of an unlicensed spectrum-based wireless communication method according to an embodiment of the present invention;
FIG 2 is a schematic flowchart of an unlicensed spectrum-based wireless communication method according to an embodiment of the present invention;
FIG 3 is a schematic flowchart of an unlicensed spectrum-based wireless communication method according to an embodiment of the present invention;
FIG 4 is a schematic structural diagram of a base station according to an embodiment of the present invention;
FIG 5 is a schematic structural diagram of a terminal device according to an embodiment of the present invention;
FIG 6 is a schematic structural diagram of a terminal device according to an embodiment of the present invention;
FIG 7 is a schematic structural diagram of a base station according to an embodiment of the present invention;
FIG 8 is a schematic structural diagram of a terminal device according to an embodiment of the present invention; and
FIG 9 is a schematic structural diagram of a terminal device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

It should be understood that the technical solutions of the present invention may be applied to various communications systems, such as a Global System for Mobile Communications (GSM), a Code Division Multiple Access (CDMA) system, a Wideband Code Division Multiple Access (WCDMA) system, a general packet radio service (GPRS) system, a Long Term Evolution (LTE) system, a Long Term Evolution Advanced (LTE-A) system, a Universal Mobile Telecommunications System (UMTS), and a 5G system.

A terminal device in the embodiments of the present invention may also be user equipment (UE), an access terminal, a subscriber unit, a subscriber station, a mobile station, a mobile console, a remote station, a remote terminal, a mobile device, a user terminal, a terminal, a wireless communications device, a user agent, a user apparatus, or the like. The access terminal may be a cellular phone, a cordless phone, a Session Initiation Protocol (SIP) phone, a wireless local loop (WLL) station, a personal digital assistant (PDA), a handheld device having a wireless communication function, a computing device, another processing device connected to a wireless modem, an in-vehicle device, a wearable device, a terminal device in a future 5G network, a terminal device in a future evolved public land mobile network (PLMN), or the like. This is not limited in the embodiments of the present invention.

In the embodiments of the present invention, a base station may be a base transceiver station (BTS) in GSM or CDMA, or may be a NodeB in WCDMA, or may be an evolved NodeB (eNB or e-NodeB) in LTE, or may be an access point that provides an access service in a 5G system. This is not limited in the embodiments of the present invention.

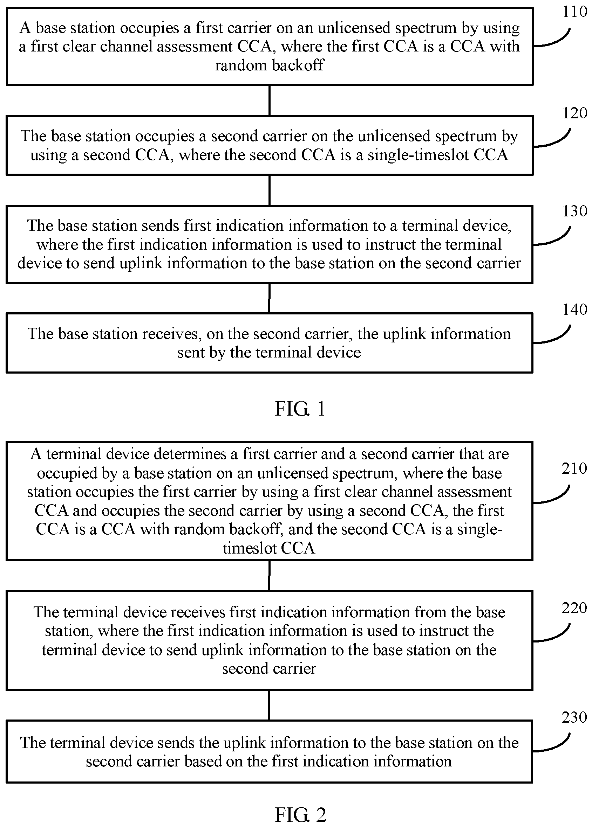

FIG 1 is a schematic flowchart of an unlicensed spectrum-based wireless communication method according to an embodiment of the present invention. The method in FIG 1 includes the following steps.

110. A base station occupies a first carrier on an unlicensed spectrum by using a first CCA, where the first CCA is a CCA with random backoff.

120. The base station occupies a second carrier on the unlicensed spectrum by using a second CCA, where the second CCA is a single-slot CCA.

It should be understood that, in this embodiment of the present invention, if both the first CCA and the second CCA are successfully performed, the base station may send downlink information on both the first carrier and the second carrier. If the first CCA is unsuccessfully performed, the base station can send no downlink information on the second carrier regardless of whether the second CCA is successfully performed.

The unlicensed spectrum may be a spectrum other than a licensed spectrum of LTE. For example, the unlicensed spectrum may be a spectrum on a 5 GHz band.

When performing the first CCA on the first carrier, the base station randomly selects a backoff counter based on a preset contention window value, and then performs the first CCA on the first carrier. If a channel is idle, a value of the backoff counter is reduced by 1; or if a channel is not idle, a value of the backoff counter remains unchanged. Such a process is cyclically performed until the value of the backoff counter is reduced to 0. The base station can send information on the carrier only in this case.

Before occupying the second carrier, the base station assesses the second carrier by using the second CCA. Specifically, provided that the base station detects that the second carrier is idle, the base station can send information on the second carrier, without a backoff process for the CCA with random backoff. In addition, a value of a slot length of the single-slot CCA may be predefined, or may be configured by the base station, or may be set according to a specific rule. A relatively common slot length of the single-slot CCA is 16 microseconds or 25 microseconds.

Optionally, when the first CCA and the second CCA are successfully performed, the base station may send the downlink information to the terminal device or another device on the first carrier and the second carrier.

It should be understood that, herein that the first CCA is successfully performed means that when the base station performs the CCA on the first carrier, a count value of the backoff counter is reduced to 0, and the base station can occupy the first carrier for a period of time, and send a signal on the first carrier. In addition, that the second CCA is successfully performed means that the base station can send information on a carrier provided that the base station senses, within a slot length range, that the carrier is idle.

It should be understood that, during the first CCA, it needs to be detected, in a plurality of slots, that a channel is idle before a signal can be sent on the carrier. However, during the second CCA, a signal can be sent on a carrier provided that it is detected, in a slot, that the carrier is idle. Therefore, for a same carrier, the carrier is more difficult to occupy by using the first CCA whereas the carrier is less difficult to occupy by using the second CCA.

It should be understood that when detection is performed on a carrier, if it is detected that energy of the channel is less than a preset threshold, it may be considered that the channel is idle, and in this case, no other device occupies the channel; or if it is detected that energy of the channel is greater than or equal to a preset threshold, it may be considered that the channel is in a non-idle or busy state, and in this case, another device occupies the channel.

It should be understood that the carrier mentioned in this embodiment of the present invention is the channel, and the carrier and the channel are not differentiated.

CCA categories may specifically include a category 4, a category 3, a category 2, and a category 1, and meanings of the various CCA categories are specifically as follows:

Category 4: When performing detection on a carrier, a node sets a contention window with a variable length, and randomly selects a backoff counter in the contention window. When the carrier is idle, a count value of the backoff counter is reduced by 1; or when the carrier is not idle, a count value of the backoff counter remains unchanged. Such a process is cyclically performed until the value of the backoff counter is reduced to 0. The node can send information on the carrier only in the case that the value of the backoff counter is reduced to 0.

Category 3: When performing detection on a carrier, a node sets a contention window with a fixed length, and randomly selects a random backoff counter in the contention window. When the carrier is idle, a count value of the backoff counter is reduced by 1; or when the carrier is not idle, a count value of the backoff counter remains unchanged. Such a process is cyclically performed until the value of the backoff counter is reduced to 0. The node can send information on the carrier in this case. A difference between the category 3 and the category 4 is that a length of the contention window is fixed for the category 3.

Category 2: When performing detection on a carrier, a node can directly send information on the carrier provided that the node detects, within a fixed time (for example, 16 microseconds or 25 microseconds), that the carrier is in an idle state.

Category 1: A node directly sends information on a carrier without sensing the carrier.

It should be understood that, in the CCA types, the category 4 and the category 3 are corresponding to the CCA with random backoff, and the category 2 is corresponding to the single-slot CCA. In addition, the single-slot CCA is not limited to a CCA of the category 2, and may be extended to another single-slot CCA. For example, it is unnecessary to perform detection for a fixed time of 25 microseconds, but instead, detection may be performed for 25 microseconds for a plurality of times in a time window. Provided that it is detected once that the carrier is idle, it may be considered that the single-slot CCA is successfully performed.

130. The base station sends first indication information to a terminal device, where the first indication information is used to instruct the terminal device to send uplink information to the base station on the second carrier.

Optionally, in an embodiment, after receiving the first indication information, the terminal device first performs a third CCA on the second carrier, and sends the uplink information to the base station on the first carrier when the third CCA is successfully performed.

Optionally, after receiving the first indication information, the terminal device sends the uplink information to the base station on the second carrier in a first MCOT. The first MCOT is maximum duration in which the base station can occupy the first carrier.

It should be understood that, when there are a plurality of second carriers and one first carrier, the terminal device may send the uplink information on the plurality of second carriers in the first MCOT.

Optionally, the first MCOT is determined based on a contention window of the first CCA and/or a downlink service level corresponding to the first CCA performed by the base station.

To be specific, the first MCOT is corresponding to a parameter of the CCA with random backoff that is performed by the base station on the first carrier, and the parameter may include at least one of a contention window value of the CCA with random backoff that is performed by the base station on the first carrier, and the downlink service level corresponding to the CCA with random backoff that is performed by the base station on the first carrier. For example, a larger contention window value indicates a larger first MCOT, and a higher service level indicates a smaller first MCOT.

It should be understood that the terminal device may send the uplink information to the base station on the second carrier in the first MCOT, and in this case, it may be considered that a second MCOT of the base station on the second carrier may be equal to the first MCOT. In other words, the plurality of carriers on which the base station performs the single-slot CCA and the carrier on which the base station performs the CCA with random backoff currently have a common MCOT, namely, the first MCOT. The first MCOT shared by the plurality of carriers is determined by the CCA parameter of the CCA with random backoff that is performed by the base station.

The terminal device may send the uplink information to the base station on the second carrier in the first MCOT or the second MCOT. Herein the second MCOT is maximum duration in which the base station can occupy the second carrier. Similar to the first MCOT, the second MCOT may also be determined based on a contention window of the second CCA and/or a downlink service level corresponding to the second CCA performed by the base station.

It should be understood that, that the terminal device sends the uplink information to the base station on the second carrier in the first MCOT or the second MCOT means that the terminal device sends the uplink information in a remaining time other than an occupancy time of the base station in the first MCOT or the second MCOT. For example, if the first MCOT is 10 ms, and the time in which the base station actually occupies the second carrier is 4 ms, the terminal device may occupy the second carrier in a remaining time of 6 ms and send the uplink information to the base station on the second carrier; or if the second MCOT is 6 ms, and the time in which the base station actually occupies the second carrier is 4 ms, the terminal device may occupy the second carrier in a remaining time of 2 ms and send the uplink information to the base station on the second carrier. Generally, because it is more difficult to occupy the carrier by using the first CCA, but once the carrier is preempted, a longer occupancy time is allocated; and it is easy to occupy the carrier by using the second CCA, and a time of occupying the carrier is shorter, the first MCOT is greater than the second MCOT. Therefore, when the terminal device sends the uplink information to the base station in the first MCOT, a time in which the terminal device can occupy the second carrier to send the uplink information is longer. Therefore, in this embodiment of the present invention, the terminal device may send the uplink information to the base station in the first MCOT or the second MCOT, and therefore flexibility of sending the uplink information by the terminal device by using the first carrier is improved.

140. The base station receives, on the second carrier, the uplink information from the terminal device.

In this embodiment of the present invention, the base station may also share, with the terminal device, the carrier occupied by using the single-slot CCA, so that the terminal device can also send the uplink information on the carrier. Therefore, utilization of an unlicensed spectrum resource is improved.

Optionally, in an embodiment, the base station sends second indication information to the terminal device. The second indication information is used to indicate a CCA type of a third CCA performed by the terminal device on the second carrier before the terminal device sends the uplink information, and the category of the third CCA may be a CCA with random backoff or a single-slot CCA.

It should be understood that the second indication information may directly indicate the CCA type, and after receiving the second indication information, the terminal device may directly assess the second carrier based on the CCA type indicated by the second indication information. The category of the third CCA performed by the terminal device on the second carrier may be determined by the base station. The base station may instruct, by using the second indication information, the terminal device to directly assess the second carrier by using the single-slot CCA. In this way, the terminal device can use the second carrier to send the uplink information to the base station when detecting that the second carrier is idle, so that the terminal device rapidly occupies the second carrier and sends the uplink information to the base station. However, when the base station instructs, by using the second indication information, the terminal device to assess the second carrier by using the CCA with random backoff, it becomes more difficult for the terminal device to occupy the second carrier, and the terminal device can send the uplink information on the second carrier only when the CCA with random backoff is completely successfully performed.

Optionally, in an embodiment, the second indication information carries interval information of the third CCA, and the interval information of the third CCA is used to indicate the CCA type of the third CCA performed by the terminal device on the second carrier before the terminal device sends the uplink information.

After receiving the second indication information, the terminal device may determine the CCA type of the third CCA based on a CCA interval of the third CCA and a correspondence between CCA intervals and candidate CCA types. The candidate CCA types include the CCA with random backoff and the single-slot CCA.

It should be understood that the CCA interval information of the third CCA in the second indication information indirectly indicates the CCA type, and after receiving the CCA interval information, the terminal device needs to first determine the CCA type of the third CCA based on the CCA interval information, and then perform the third CCA on the second carrier. For example, a first CCA interval is corresponding to the CCA with random backoff, and a second CCA interval is corresponding to the single-slot CCA. When the CCA interval information carries first CCA interval information, the terminal device determines that the third CCA is a CCA with random backoff; or when the CCA interval information carries second CCA interval information, the terminal device determines that the third CCA is a single-slot CCA.

When the terminal device sends the uplink information on the second carrier, the base station shares an opportunity for transmitting downlink information with the terminal device, so that the terminal device can transmit the uplink information by using the opportunity. In this way, a same carrier can be used for uplink and downlink information transmission, and utilization of a carrier resource is improved.

It is assumed that the base station performs a CCA of the category 4 (where a time in which the base station is allowed to occupy the first carrier is the second MCOT) on the first carrier, and performs the CCA of the category 2 (where a time in which the base station is allowed to occupy the second carrier is the first MCOT) on the second carrier. The base station may share an opportunity for sending the downlink information on the second carrier with the terminal device in the second MCOT, so that the terminal device sends the uplink information. Alternatively, the base station may share an opportunity for sending the downlink information on the first carrier with the terminal device in the first MCOT, so that the terminal device sends the uplink information. There are three cases for sending, by the terminal device, the uplink information to the base station on the second carrier to perform LBT on the first carrier:
Case 1: In the first MCOT, the terminal device sends the uplink information to the base station on the second carrier. In other words, the base station does not share the second MCOT with the terminal device, but shares the first MCOT with the terminal device, so that the terminal device sends the uplink information on the first carrier in the first MCOT. For example, if the first MCOT is 8 ms, and the base station occupies 4 ms to send the downlink information, remaining 4 ms may be used when the terminal device transmits the uplink information on the second carrier by using the CCA of the category 2, and may also be used when the terminal device transmits the uplink information on the first carrier by using the CCA of the category 4. In other words, the MCOT may be shared across carriers.
Case 2: In the second MCOT, the terminal device sends the uplink information to the base station on the second carrier. Specifically, the base station may determine a priority of a service on the second carrier, and then determine a second MCOT value on the first carrier based on a correspondence (generally, a priority of each service is corresponding to one MCOT value, for example, a higher priority of a service usually indicates a smaller MCOT value) between a priority of a service and an MCOT value. If a sum of a time in which the base station sends the downlink information and a time in which the terminal device sends the uplink information falls within the second MCOT, before the terminal device sends the uplink information to the base station on the second carrier, the terminal device may perform the CCA of the category 2. Otherwise, the terminal device needs to perform the CCA of the category 4.
Case 3: Regardless of whether a sum of a time in which the base station sends the downlink information and a time in which the terminal device sends the uplink information falls within the first MCOT or the second MCOT, the terminal device can perform only the CCA of the category 4.

With reference to FIG 1, the foregoing describes the unlicensed spectrum-based wireless communication method in the embodiments of the present invention from a perspective of the base station. With reference to FIG 2, the following describes in detail the unlicensed spectrum-based wireless communication method in the embodiments of the present invention from a perspective of a terminal device.

FIG 2 is a schematic flowchart of an unlicensed spectrum-based wireless communication method according to an embodiment of the present invention. The method in FIG 2 includes the following steps.

210. A terminal device determines a first carrier and a second carrier that are occupied by a base station on an unlicensed spectrum, where the base station occupies the first carrier by using a first clear channel assessment CCA and occupies the second carrier by using a second CCA, the first CCA is a CCA with random backoff, and the second CCA is a single-slot CCA.

220. The terminal device receives first indication information from the base station, where the first indication information is used to instruct the terminal device to send uplink information to the base station on the second carrier.

230. The terminal device sends the uplink information to the base station on the second carrier based on the first indication information.

In this embodiment of the present invention, the base station may also share, with the terminal device, the carrier occupied by using the single-slot CCA, so that the terminal device can also send the uplink information on the carrier. Therefore, utilization of an unlicensed spectrum resource is improved.

Optionally, in an embodiment, the sending, by the terminal device, the uplink information to the base station on the second carrier based on the first indication information includes: sending, by the terminal device, the uplink information to the base station on the second carrier in a first maximum channel occupancy time MCOT, where the first MCOT is maximum duration in which the base station can occupy the first carrier.

Optionally, in an embodiment, the first MCOT is determined based on a contention window of the first CCA and/or a downlink service level corresponding to the first CCA performed by the base station.

Optionally, in an embodiment, before the sending, by the terminal device, the uplink information to the base station on the second carrier based on the first indication information, the method further includes: performing, by the terminal device, a third CCA on the second carrier. The sending, by the terminal device, the uplink information to the base station on the second carrier based on the first indication information includes: when the third CCA is successfully performed, sending, by the terminal device, the uplink information to the base station on the second carrier.

Optionally, in an embodiment, the terminal device receives second indication information from the base station. The terminal device determines a CCA type of the third CCA based on the second indication information, and the CCA type of the third CCA is a CCA with random backoff or a single-slot CCA.

Optionally, in an embodiment, the second indication information includes CCA interval information of the third CCA, and the determining, by the terminal device, a CCA type of the third CCA based on the second indication information includes: determining, by the terminal device, the CCA type of the third CCA based on a CCA interval of the third CCA and a correspondence between CCA intervals and candidate CCA types, where the candidate CCA types include the CCA with random backoff and the single-slot CCA.

With reference to FIG 1 and FIG 2, the foregoing describes in detail the unlicensed spectrum-based wireless communication method in the embodiments of the present invention respectively from the perspective of the base station and the perspective of the terminal device. Actually, when sharing, for sending the uplink information, the carrier occupied by the base station, the terminal device first needs to perform CCA detection on the carrier. During CCA detection on the carrier, energy of a signal on the carrier may be determined, and when the energy of the signal is less than a threshold, it is considered that the carrier is in an idle state. Therefore, when the terminal device shares the carrier occupied by the base station, how to set an energy detection threshold for CCA detection is a problem that needs to be considered.

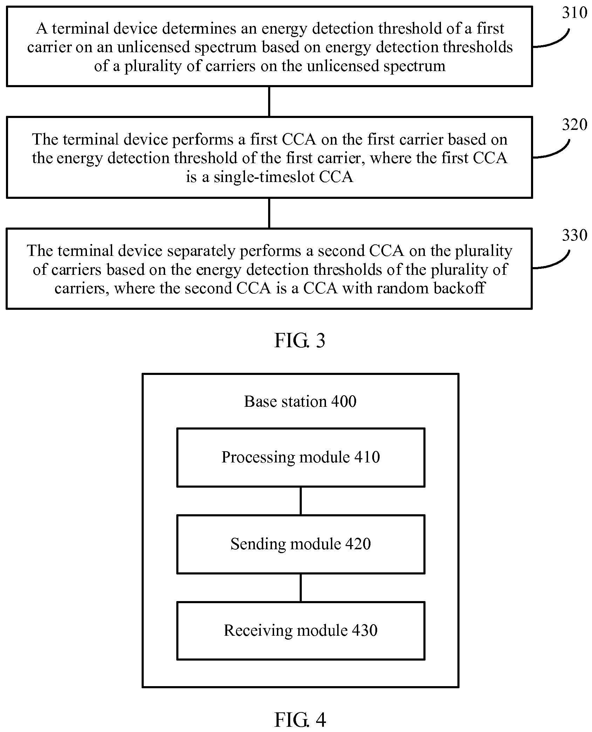

In the prior art, if a base station performs CCA detection on a plurality of carriers and performs detection on a first carrier by using a CCA with random backoff, and an energy detection threshold for detection performed on the first carrier is a first energy detection threshold, an energy detection threshold used when the base station performs CCA detection on another carrier is also set to the first energy detection threshold. In other words, the energy detection threshold is consistent with the energy detection threshold for detection performed on the first carrier. However, this manner is not flexible enough, performance of the plurality of carriers is not comprehensively considered, and an energy detection threshold for CCA detection performed on a carrier before a terminal device sends uplink information is not specified. Therefore, a new method is required to determine, before the terminal device shares a carrier occupied by the base station and sends uplink information, an energy detection threshold for CCA performed on the carrier. With reference to FIG 3, the following describes in detail the unlicensed spectrum-based wireless communication method in the embodiments of the present invention.

FIG 3 is a schematic flowchart of an unlicensed spectrum-based wireless communication method according to an embodiment of the present invention. The method in FIG 3 includes the following steps.

310. A terminal device determines an energy detection threshold of a first carrier on an unlicensed spectrum based on energy detection thresholds of a plurality of carriers on the unlicensed spectrum.

320. The terminal device performs a first CCA on the first carrier based on the energy detection threshold of the first carrier, where the first CCA is a single-slot CCA.

330. The terminal device separately performs a second CCA on the plurality of carriers based on the energy detection thresholds of the plurality of carriers, where the second CCA is a CCA with random backoff.

Optionally, the first carrier and the plurality of carriers may be carriers that are occupied by the base station after the base station successfully performs a CCA, and the base station shares the first carrier with the terminal device, so that the terminal device can send uplink information on the first carrier.

It should be understood that the energy detection thresholds used when the terminal device performs the CCA on the plurality of carriers may be the same or different. For example, if there are a total of three carriers, energy detection thresholds used to separately perform a CCA on the three carriers may be three different values, or may be other values.

In this embodiment of the present invention, when the terminal device sends uplink information on the plurality of carriers, the terminal device can more properly determine, comprehensively based on the energy detection thresholds of the plurality of carriers (where the plurality of carriers are carriers occupied by using the CCA with random backoff), the energy detection threshold of the carrier on which the single-slot CCA is to be performed.

Optionally, in an embodiment, the terminal device determines, depending on results of performing the first CCA and the second CCA, whether to send the uplink information on the first carrier and the plurality of carriers.

When both the first CCA and the second CCA are successfully performed, the terminal device can send the uplink information on the first carrier and the plurality of carriers. When only the first CCA is successfully performed, the terminal device can send the uplink information only on the first carrier.

Optionally, in an embodiment, the terminal device determines the energy detection threshold of the first carrier based on an energy detection threshold of a second carrier in the plurality of carriers, and the energy detection threshold of the second carrier is a smallest energy detection threshold in the energy detection thresholds of the plurality of carriers.

Because it is more difficult to occupy the carrier by using the single-slot CCA than to occupy the carrier by using the CCA with random backoff, and a smaller value of the energy detection threshold indicates a greater difficulty in occupying the carrier, for fairness of carrier occupancy, the energy detection threshold of the first carrier may be set with reference to the smallest energy detection threshold.

Preferably, the energy detection threshold of the first carrier is less than or equal to the energy detection threshold of the second carrier. Specifically, the energy detection threshold of the first carrier may be less than the energy detection threshold of the second carrier, and a difference between the energy detection threshold of the second carrier and the energy detection threshold of the first carrier is a preset first difference.

The energy detection threshold of the first carrier is set to be less than or equal to the energy detection threshold of the second carrier, so that a requirement for performing the CCA by the terminal device on the first carrier is more stringent. Therefore, the uplink information can be transmitted on the carriers more fairly balanced.

Optionally, in an embodiment, the terminal device determines the energy detection threshold of the first carrier based on an energy detection threshold of a third carrier in the plurality of carriers, and the third carrier is a carrier that has a largest or smallest index number in the plurality of carriers.

Preferably, the energy detection threshold of the first carrier is less than or equal to the energy detection threshold of the third carrier. Specifically, the energy detection threshold of the first carrier may be less than the energy detection threshold of the third carrier, and a difference between the energy detection threshold of the third carrier and the energy detection threshold of the first carrier is a preset third difference.

Optionally, in an embodiment, the terminal device determines an average value of the energy detection thresholds of the plurality of carriers as the energy detection threshold of the first carrier.

Specifically, when the plurality of carriers include 10 carriers, any two carriers may be selected from the plurality of carriers, and an average value of energy detection thresholds of the two carriers is set as the energy detection threshold of the first carrier. Certainly, an average value of energy detection thresholds of at least three carriers may be set as the energy detection threshold of the first carrier.

Optionally, any two carriers may be selected from the plurality of carriers, and the energy detection threshold of the first carrier is set to be between energy detection thresholds of the two carriers.

With reference to FIG 1 to FIG 3, the foregoing describes in detail the unlicensed spectrum-based wireless communication method in the embodiments of the present invention. With reference to FIG 4 to FIG 9, the following describes a base station and a terminal device in the embodiments of the present invention.

It should be understood that the base station and the terminal device described in FIG 4 to FIG 9 can implement steps of the unlicensed spectrum-based wireless communication method in the embodiments of the present invention in FIG 1 to FIG 3. For brevity, repeated descriptions are appropriately omitted.

FIG 4 is a schematic structural diagram of a base station according to an embodiment of the present invention. The base station 400 in FIG 4 includes:
a processing module 410, configured to occupy a first carrier on an unlicensed spectrum by using a first clear channel assessment CCA, where the first CCA is a CCA with random backoff, where
the processing module 410 is further configured to occupy a second carrier on the unlicensed spectrum by using a second CCA, where the second CCA is a single-slot CCA;
a sending module 420, configured to send first indication information to a terminal device, where the first indication information is used to instruct the terminal device to send uplink information to the base station on the second carrier; and
a receiving module 430, configured to receive, on the second carrier, the uplink information from the terminal device.

In this embodiment of the present invention, the base station may also share, with the terminal device, the carrier occupied by using the single-slot CCA, so that the terminal device can also send the uplink information on the carrier. Therefore, utilization of an unlicensed spectrum resource is improved.

Optionally, in an embodiment, the first indication information is specifically used to instruct the terminal device to send the uplink information to the base station on the second carrier in a first maximum channel occupancy time MCOT, and the first MCOT is maximum duration in which the base station can occupy the first carrier.

Optionally, in an embodiment, the first MCOT is determined based on a contention window of the first CCA and/or a downlink service level corresponding to the first CCA performed by the base station.

Optionally, in an embodiment, the sending module 420 is further configured to send second indication information to the terminal device, where the second indication information is used to indicate a CCA type of a third CCA performed by the terminal device on the second carrier before the terminal device sends the uplink information, and the CCA type of the third CCA is a CCA with random backoff or a single-slot CCA.

Optionally, in an embodiment, the second indication information carries interval information of the third CCA, and the interval information of the third CCA is used to indicate the CCA type of the third CCA.

It should be understood that the base station 400 in FIG 4 can perform steps in the unlicensed spectrum-based wireless communication method shown in FIG 1 that are performed by the base station.

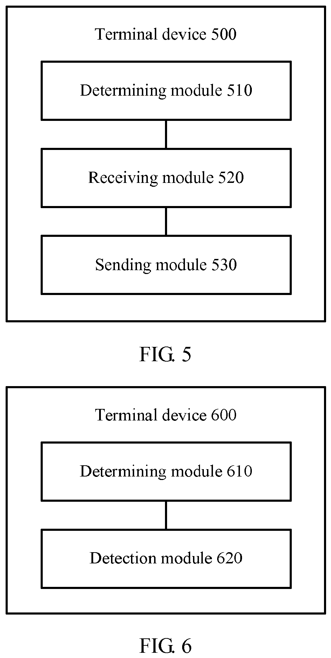

FIG 5 is a schematic structural diagram of a terminal device according to an embodiment of the present invention. The terminal device 500 in FIG 5 includes:
a determining module 510, configured to determine a first carrier and a second carrier that are occupied by a base station on an unlicensed spectrum, where the base station occupies the first carrier by using a first clear channel assessment CCA and occupies the second carrier by using a second CCA, the first CCA is a CCA with random backoff, and the second CCA is a single-slot CCA;
a receiving module 520, configured to receive first indication information from the base station, where the first indication information is used to instruct the terminal device to send uplink information to the base station on the second carrier; and
a sending module 530, configured to send the uplink information to the base station on the second carrier based on the first indication information.

In this embodiment of the present invention, the base station may also share, with the terminal device, the carrier occupied by using the single-slot CCA, so that the terminal device can also send the uplink information on the carrier. Therefore, utilization of an unlicensed spectrum resource is improved.

Optionally, in an embodiment, the sending module 530 is specifically configured to send the uplink information to the base station on the second carrier in a first maximum channel occupancy time MCOT, where the first MCOT is maximum duration in which the base station can occupy the first carrier.

Optionally, in an embodiment, the first MCOT is determined based on a contention window of the first CCA and/or a downlink service level corresponding to the first CCA performed by the base station.

Optionally, in an embodiment, the terminal device further includes a detection module 540, configured to perform a third CCA on the second carrier. The sending module 530 is specifically configured to: when the third CCA is successfully performed, send the uplink information to the base station on the second carrier.

Optionally, in an embodiment, the receiving module 520 is further configured to receive second indication information from the base station; and the determining module 510 is further configured to determine a CCA type of the third CCA based on the second indication information, where the CCA type of the third CCA is a CCA with random backoff or a single-slot CCA.

Optionally, in an embodiment, the second indication information includes CCA interval information of the third CCA, and the determining module 510 is specifically configured to determine the CCA type of the third CCA based on a CCA interval of the third CCA and a correspondence between CCA intervals and candidate CCA types, where the candidate CCA types include the CCA with random backoff and the single-slot CCA.

It should be understood that the terminal device 500 in FIG 5 can perform steps in the unlicensed spectrum-based wireless communication method shown in FIG 2 that are performed by the terminal device.

FIG 6 is a schematic structural diagram of a terminal device according to an embodiment of the present invention. The terminal device 600 in FIG 6 includes:
a determining module 610, configured to determine an energy detection threshold of a first carrier on an unlicensed spectrum based on energy detection thresholds of a plurality of carriers on the unlicensed spectrum; and
a detection module 620, configured to perform a first CCA on the first carrier based on the energy detection threshold of the first carrier, where the first CCA is a single-slot CCA, where
the detection module 620 is further configured to separately perform a second CCA on the plurality of carriers based on the energy detection thresholds of the plurality of carriers, where the second CCA is a CCA with random backoff.

In this embodiment of the present invention, when the terminal device sends uplink information on the plurality of carriers, the terminal device can more properly determine, comprehensively based on the energy detection thresholds of the plurality of carriers (where the plurality of carriers are carriers occupied by using the CCA with random backoff), the energy detection threshold of the carrier on which the single-slot CCA is to be performed.

Optionally, in an embodiment, the determining module 610 is further configured to determine, depending on results of performing the first CCA and the second CCA, whether to send uplink information on the first carrier and the plurality of carriers.

Optionally, in an embodiment, the determining module 610 is specifically configured to determine the energy detection threshold of the first carrier based on an energy detection threshold of a second carrier in the plurality of carriers, where the energy detection threshold of the second carrier is a smallest energy detection threshold in the energy detection thresholds of the plurality of carriers.

Optionally, in an embodiment, the determining module 610 is specifically configured to determine that the energy detection threshold of the first carrier is less than or equal to the energy detection threshold of the second carrier.

Optionally, in an embodiment, the determining module 610 is specifically configured to determine the energy detection threshold of the first carrier based on an energy detection threshold of a third carrier in the plurality of carriers, where the third carrier is a carrier that has a largest or smallest index number in the plurality of carriers.

Optionally, in an embodiment, the determining module 610 is specifically configured to determine that the energy detection threshold of the first carrier is less than or equal to the energy detection threshold of the third carrier.

It should be understood that the terminal device 600 in FIG 6 can perform steps in the unlicensed spectrum-based wireless communication method shown in FIG 3 that are performed by the terminal device.

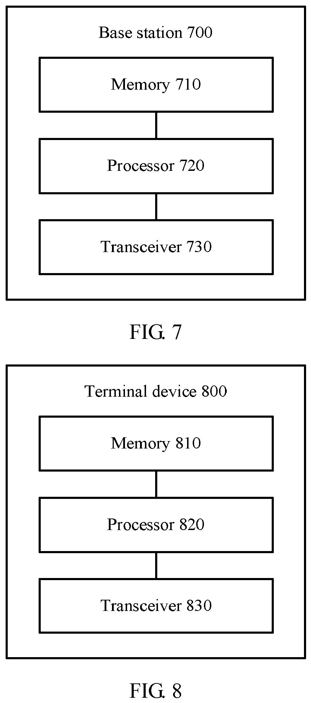

FIG 7 is a schematic structural diagram of a base station according to an embodiment of the present invention. The base station 700 in FIG 7 includes:
a memory 710, configured to store a program;
a processor 720, configured to execute the program in the memory 710, where when executing the program, the processor 720 is configured to occupy a first carrier on an unlicensed spectrum by using a first clear channel assessment CCA, where the first CCA is a CCA with random backoff, where
the processor 720 is further configured to occupy a second carrier on the unlicensed spectrum by using a second CCA, where the second CCA is a single-slot CCA; and
a transceiver 730, configured to send first indication information to a terminal device, where the first indication information is used to instruct the terminal device to send uplink information to the base station on the second carrier, where
the transceiver 730 is further configured to receive, on the second carrier, the uplink information from the terminal device.

In this embodiment of the present invention, the base station may also share, with the terminal device, the carrier occupied by using the single-slot CCA, so that the terminal device can also send the uplink information on the carrier. Therefore, utilization of an unlicensed spectrum resource is improved.

Optionally, in an embodiment, the first indication information is specifically used to instruct the terminal device to send the uplink information to the base station on the second carrier in a first maximum channel occupancy time MCOT, and the first MCOT is maximum duration in which the base station can occupy the first carrier.

Optionally, in an embodiment, the first MCOT is determined based on a contention window of the first CCA and/or a downlink service level corresponding to the first CCA performed by the base station.

Optionally, in an embodiment, the processor 720 is further configured to send second indication information to the terminal device, where the second indication information is used to indicate a CCA type of a third CCA performed by the terminal device on the second carrier before the terminal device sends the uplink information, and the CCA type of the third CCA is a CCA with random backoff or a single-slot CCA.

Optionally, in an embodiment, the second indication information carries interval information of the third CCA, and the interval information of the third CCA is used to indicate the CCA type of the third CCA.

It should be understood that the base station 700 in FIG 7 can perform steps in the unlicensed spectrum-based wireless communication method shown in FIG 1 that are performed by the base station.

FIG 8 is a schematic structural diagram of a terminal device according to an embodiment of the present invention. The terminal device 800 in FIG 8 includes:
a memory 810, configured to store a program;
a processor 820, configured to execute the program in the memory 810, where when executing the program, the processor 820 is configured to determine a first carrier and a second carrier that are occupied by a base station on an unlicensed spectrum, where the base station occupies the first carrier by using a first clear channel assessment CCA and occupies the second carrier by using a second CCA, the first CCA is a CCA with random backoff, and the second CCA is a single-slot CCA; and
a transceiver 830, configured to receive first indication information from the base station, where the first indication information is used to instruct the terminal device to send uplink information to the base station on the second carrier, where
the transceiver 830 is further configured to send the uplink information to the base station on the second carrier based on the first indication information.

In this embodiment of the present invention, the base station may also share, with the terminal device, the carrier occupied by using the single-slot CCA, so that the terminal device can also send the uplink information on the carrier. Therefore, utilization of an unlicensed spectrum resource is improved.

Optionally, in an embodiment, the transceiver 830 is specifically configured to send the uplink information to the base station on the second carrier in a first maximum channel occupancy time MCOT, where the first MCOT is maximum duration in which the base station can occupy the first carrier.

Optionally, in an embodiment, the first MCOT is determined based on a contention window of the first CCA and/or a downlink service level corresponding to the first CCA performed by the base station.

Optionally, in an embodiment, the processor 820 is configured to perform a third CCA on the second carrier; and the transceiver 830 is specifically configured to: when the third CCA is successfully performed, send the uplink information to the base station on the second carrier.

Optionally, in an embodiment, the transceiver 830 is further configured to receive second indication information from the base station; and the processor 820 is further configured to determine a CCA type of the third CCA based on the second indication information, where the CCA type of the third CCA is a CCA with random backoff or a single-slot CCA.

Optionally, in an embodiment, the second indication information includes CCA interval information of the third CCA, and the processor 820 is specifically configured to determine the CCA type of the third CCA based on a CCA interval of the third CCA and a correspondence between CCA intervals and candidate CCA types, where the candidate CCA types include the CCA with random backoff and the single-slot CCA.

It should be understood that the terminal device 800 in FIG 8 can perform steps in the unlicensed spectrum-based wireless communication method shown in FIG 2 that are performed by the terminal device.

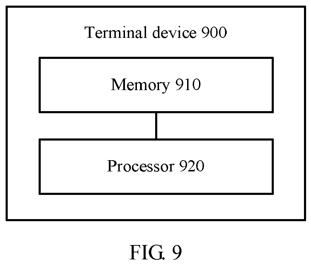

FIG 9 is a schematic structural diagram of a terminal device according to an embodiment of the present invention. The terminal device 900 in FIG 9 includes:
a memory 910, configured to store a program; and
a processor 920, configured to execute the program in the memory 910, where when executing the program, the processor 920 is configured to determine an energy detection threshold of a first carrier on an unlicensed spectrum based on energy detection thresholds of a plurality of carriers on the unlicensed spectrum, where
the processor 920 is further configured to perform a first CCA on the first carrier based on the energy detection threshold of the first carrier, where the first CCA is a single-slot CCA; and
the processor 920 is further configured to separately perform a second CCA on the plurality of carriers based on the energy detection thresholds of the plurality of carriers, where the second CCA is a CCA with random backoff.

In this embodiment of the present invention, when the terminal device sends uplink information on the plurality of carriers, the terminal device can more properly determine, comprehensively based on the energy detection thresholds of the plurality of carriers (where the plurality of carriers are carriers occupied by using the CCA with random backoff), the energy detection threshold of the carrier on which the single-slot CCA is to be performed.

Optionally, in an embodiment, the processor 920 is further configured to determine, depending on results of performing the first CCA and the second CCA, whether to send uplink information on the first carrier and the plurality of carriers.

Optionally, in an embodiment, the processor 920 is specifically configured to determine the energy detection threshold of the first carrier based on an energy detection threshold of a second carrier in the plurality of carriers, where the energy detection threshold of the second carrier is a smallest energy detection threshold in the energy detection thresholds of the plurality of carriers.

Optionally, in an embodiment, the processor 920 is specifically configured to determine that the energy detection threshold of the first carrier is less than or equal to the energy detection threshold of the second carrier.

Optionally, in an embodiment, the processor 920 is specifically configured to determine the energy detection threshold of the first carrier based on an energy detection threshold of a third carrier in the plurality of carriers, where the third carrier is a carrier that has a largest or smallest index number in the plurality of carriers.

Optionally, in an embodiment, the processor 920 is specifically configured to determine that the energy detection threshold of the first carrier is less than or equal to the energy detection threshold of the third carrier.

It should be understood that the terminal device 900 in FIG 9 can perform steps in the unlicensed spectrum-based wireless communication method shown in FIG 3 that are performed by the terminal device.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for convenience and brevity of description, for a detailed working process of the foregoing system, apparatus, and unit, reference may be made to a corresponding process in the foregoing method embodiments, and details are not described herein again.

In the embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the shown or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts shown as units may or may not be physical units, may be located in one position, or may be distributed on a plurality of network units. Some or all of the units may be selected depending on actual requirements to achieve the objectives of the solutions of the embodiments.

In addition, functional units in the embodiments of the present invention may be integrated into one processing unit, or each of the units may exist alone physically, or at least two units may be integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of the present invention. The foregoing storage medium includes any medium that can store program code, such as a USB flash drive, a removable hard disk, a read-only memory (ROM), a random access memory (RAM), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An unlicensed spectrum-based wireless communication method, comprising:
occupying (110), by a base station, a first carrier on an unlicensed spectrum by using a first clear channel assessment, CCA, wherein the first CCA is a CCA with random backoff;
occupying (120), by the base station, a second carrier on the unlicensed spectrum by using a second CCA, wherein the second CCA is a single-slot CCA; wherein a maximum channel occupancy time, MCOT, of the base station on the second carrier is determined as equal to the MCOT on which the base station performs the CCA with random backoff currently on the first carrier;
sending (130), by the base station, first indication information to a terminal device, wherein the first indication information is used to instruct the terminal device to send uplink information to the base station on the second carrier in the MCOT; and
after sending the first indication information, receiving (140), by the base station on the second carrier in the MCOT, the uplink information from the terminal device.

2. The method according to claim 1, wherein the MCOT is determined based on a contention window of the first CCA and/or a downlink service level corresponding to the first CCA performed by the base station.

3. The method according to any one of claims 1 to 2, wherein the method further comprises:
sending, by the base station, second indication information to the terminal device, wherein the second indication information is used to indicate a CCA type of a third CCA performed by the terminal device on the second carrier before the terminal device sends the uplink information, and the CCA type of the third CCA is a single-slot CCA.

4. An unlicensed spectrum-based wireless communication method, comprising:
determining (210), by a terminal device, a first carrier and a second carrier that are occupied by a base station on an unlicensed spectrum, wherein the base station occupies the first carrier by using a first clear channel assessment, CCA, and occupies the second carrier by using a second CCA, the first CCA is a CCA with random backoff, and the second CCA is a single-slot CCA; wherein a maximum channel occupancy time, MCOT, of the base station on the second carrier is determined as equal to the MCOT on which the base station performs the CCA with random backoff currently on the first carrier;
receiving (220), by the terminal device, first indication information from the base station, wherein the first indication information is used to instruct the terminal device to send uplink information to the base station on the second carrier in the MCOT; and
after receiving the first indication information, sending (230), by the terminal device, the uplink information to the base station on the second carrier in the MCOT.

5. The method according to claim 4, wherein the method further comprises:
receiving, by the terminal device, second indication information from the base station; and
determining, by the terminal device, a CCA type of the third CCA based on the second indication information, wherein the CCA type of the third CCA is a single-slot CCA.

6. A base station, comprising:
a processing module (410), configured to occupy a first carrier on an unlicensed spectrum by using a first clear channel assessment, CCA, wherein the first CCA is a CCA with random backoff, wherein
the processing module (410) is further configured to occupy a second carrier on the unlicensed spectrum by using a second CCA, wherein the second CCA is a single-slot CCA; wherein a maximum channel occupancy time, MCOT, of the base station on the second carrier is determined as equal to the MCOT on which the base station performs the CCA with random backoff currently on the first carrier;
a sending module (420), configured to send first indication information to a terminal device, wherein the first indication information is used to instruct the terminal device to send uplink information to the base station on the second carrier in the MCOT; and
after the sending module configured to send the first indication information, a receiving module (430), configured to receive, on the second carrier in the MCOT, the uplink information from the terminal device.

7. The base station according to claim 6, wherein the MCOT is determined based on a contention window of the first CCA and/or a downlink service level corresponding to the first CCA performed by the base station.

8. The base station according to any one of claims 6 to 7, wherein the sending module is further configured to send second indication information to the terminal device, wherein the second indication information is used to indicate a CCA type of a third CCA performed by the terminal device on the second carrier before the terminal device sends the uplink information, and the CCA type of the third CCA is a single-slot CCA.

9. A terminal device, comprising:
a determining module (510), configured to determine a first carrier and a second carrier that are occupied by a base station on an unlicensed spectrum, wherein the base station occupies the first carrier by using a first clear channel assessment, CCA, and occupies the second carrier by using a second CCA, the first CCA is a CCA with random backoff, and the second CCA is a single-slot CCA; wherein a maximum channel occupancy time, MCOT, of the base station on the second carrier is determined as equal to the MCOT on which the base station performs the CCA with random backoff currently on the first carrier;
a receiving module (520), configured to receive first indication information from the base station, wherein the first indication information is used to instruct the terminal device to send uplink information to the base station on the second carrier in the MCOT; and
after the receiving module configured to receive the first indication information, a sending module (530), configured to send the uplink information to the base station on the second carrier in the MCOT.

10. The terminal device according to claim 9, wherein the MCOT is determined based on a contention window of the first CCA and/or a downlink service level corresponding to the first CCA performed by the base station.

11. The terminal device according to any one of claims 9 to 10, wherein the receiving module is further configured to receive second indication information from the base station; and
the determining module is further configured to determine a CCA type of the third CCA based on the second indication information, wherein the CCA type of the third CCA is a single-slot CCA.

12. A computer program product comprising instructions which, when executed by a computer associated with a base station, cause the base station to carry out the method according to any one of claims 1 to 3.

13. A computer program product comprising instructions which, when executed by a computer associated with a terminal device, cause the terminal device to carry out the method according to any one of claims 4 to 5.

## Patentansprüche

1. Drahtloskommunikationsverfahren auf Basis eines unlizenzierten Frequenzspektrums, umfassend:
Belegen (110), durch eine Basisstation, eines ersten Trägers in einem unlizenzierten Frequenzspektrum unter Verwendung einer ersten Beurteilung freier Kanäle, CCA ("Clear Channel Assessment"), wobei die erste CCA eine CCA mit zufälligem Verzicht ist;
Belegen (120), durch die Basisstation, eines zweiten Trägers in dem unlizenzierten Frequenzspektrum unter Verwendung einer zweiten CCA, wobei die zweite CCA eine Einzelschlitz ("Single-Slot") -CCA ist; wobei eine maximale Kanalbelegungszeit, MCOT ("Maximum Channel Occupancy Time"), der Basisstation auf dem zweiten Träger als gleich der MCOT bestimmt wird, in der die Basisstation aktuell die CCA mit zufälligem Verzicht auf dem ersten Träger durchführt;
Senden (130), durch die Basisstation, einer ersten Anzeigeinformation an eine Endgerätvorrichtung, wobei die erste Anzeigeinformation verwendet wird, um die Endgerätvorrichtung anzuweisen, Aufwärtsverbindungsinformationen an die Basisstation auf dem zweiten Träger in der MCOT zu senden; und
nach dem Senden der ersten Anzeigeinformation, Empfangen (140), durch die Basisstation auf dem zweiten Träger in der MCOT, der Aufwärtsverbindungsinformationen von der Endgerätvorrichtung.

2. Verfahren gemäß Anspruch 1, wobei die MCOT basierend auf einem Wettbewerbs ("Contention") -Fenster der ersten CCA und/oder einer Dienstgüte der Abwärtsverbindung entsprechend der ersten CCA, die durch die Basisstation durchgeführt wird, bestimmt wird.

3. Verfahren gemäß einem der Ansprüche 1 bis 2, wobei das Verfahren ferner umfasst: Senden, durch die Basisstation, einer zweiten Anzeigeinformation an die Endgerätvorrichtung, wobei die zweite Anzeigeinformation verwendet wird, um einen CCA-Typ einer dritten CCA anzuzeigen, die von der Endgerätvorrichtung auf dem zweiten Träger durchgeführt wird, bevor die Endgerätvorrichtung die Aufwärtsverbindungsinformationen sendet, und der CCA-Typ der dritten CCA eine Einzelschlitz-CCA ist.

4. Drahtloskommunikationsverfahren auf Basis eines unlizenzierten Frequenzspektrums, umfassend:
Bestimmen (210), durch eine Endgerätvorrichtung, eines ersten Trägers und eines zweiten Trägers, die von einer Basisstation in einem unlizenzierten Frequenzspektrum belegt sind, wobei die Basisstation den ersten Träger unter Verwendung einer ersten Beurteilung freier Kanäle, CCA ("Clear Channel Assessment"), belegt und den zweiten Träger unter Verwendung einer zweiten CCA belegt, wobei die erste CCA eine CCA mit zufälligem Verzicht ist und die zweite CCA eine Einzelschlitz-CCA ist; wobei eine maximale Kanalbelegungszeit, MCOT ("Maximum Channel Occupancy Time"), der Basisstation auf dem zweiten Träger als gleich der MCOT bestimmt wird, in der die Basisstation aktuell die CCA mit zufälligem Verzicht auf dem ersten Träger durchführt;
Empfangen (220), durch die Endgerätvorrichtung, einer ersten Anzeigeinformation von der Basisstation, wobei die erste Anzeigeinformation verwendet wird, um die Endgerätvorrichtung anzuweisen, Aufwärtsverbindungsinformationen an die Basisstation auf dem zweiten Träger in der MCOT zu senden; und
nach Empfangen der ersten Anzeigeinformation, Senden (230), durch die Endgerätvorrichtung, der Aufwärtsverbindungsinformationen an die Basisstation auf dem zweiten Träger in der MCOT.

5. Verfahren gemäß Anspruch 4, wobei das Verfahren ferner umfasst:
Empfangen, durch die Endgerätvorrichtung, einer zweiten Anzeigeinformation von der Basisstation; und
Bestimmen, durch die Endgerätvorrichtung, eines CCA-Typs der dritten CCA basierend auf der zweiten Anzeigeinformation, wobei der CCA-Typ der dritten CCA eine Einzelschlitz-CCA ist.

6. Basisstation, umfassend:
ein Verarbeitungsmodul (410), das ausgelegt ist zum Belegen eines ersten Trägers in einem unlizenzierten Frequenzspektrum unter Verwendung einer ersten Beurteilung freier Kanäle, CCA ("Clear Channel Assessment"), wobei die erste CCA eine CCA mit zufälligem Verzicht ist, wobei
das Verarbeitungsmodul (410) ferner ausgelegt ist zum Belegen eines zweiten Trägers im unlizenzierten Frequenzspektrum unter Verwendung einer zweiten CCA, wobei die zweite CCA eine Einzelschlitz ("Single-Slot") -CCA ist; wobei eine maximale Kanalbelegungszeit, MCOT ("Maximum Channel Occupancy Time"), der Basisstation auf dem zweiten Träger als gleich der MCOT bestimmt wird, in der die Basisstation aktuell die CCA mit zufälligem Verzicht auf dem ersten Träger durchführt;
ein Sendemodul (420), das ausgelegt ist zum Senden einer ersten Anzeigeinformation an eine Endgerätvorrichtung, wobei die erste Anzeigeinformation verwendet wird, um die Endgerätvorrichtung anzuweisen, Aufwärtsverbindungsinformationen an die Basisstation auf dem zweiten Träger in der MCOT zu senden; und
nach dem Sendemodul, das ausgelegt ist zum Senden der ersten Anzeigeinformation, ein Empfangsmodul (430), das ausgelegt ist zum Empfangen, auf dem zweiten Träger in der MCOT, der Aufwärtsverbindungsinformationen von der Endgerätvorrichtung.

7. Basisstation gemäß Anspruch 6, wobei die MCOT basierend auf einem Wettbewerbs ("Contention") -Fenster der ersten CCA und/oder einer Dienstgüte der Abwärtsverbindung entsprechend der ersten CCA, die durch die Basisstation durchgeführt wird, bestimmt wird.

8. Basisstation gemäß einem der Ansprüche 6 bis 7, wobei das Sendemodul ferner ausgelegt ist zum Senden einer zweiten Anzeigeinformation an die Endgerätvorrichtung, wobei die zweite Anzeigeinformation verwendet wird, um einen CCA-Typ einer dritten CCA anzuzeigen, die von der Endgerätvorrichtung auf dem zweiten Träger durchgeführt wird, bevor die Endgerätvorrichtung die Aufwärtsverbindungsinformationen sendet, und der CCA-Typ der dritten CCA eine Einzelschlitz-CCA ist.

9. Endgerätvorrichtung, umfassend:
ein Bestimmungsmodul (510), das ausgelegt ist zum Bestimmen eines ersten Trägers und eines zweiten Trägers, die von einer Basisstation in einem unlizenzierten Frequenzspektrum belegt sind, wobei die Basisstation den ersten Träger unter Verwendung einer ersten Beurteilung freier Kanäle, CCA ("Clear Channel Assessment"), belegt und den zweiten Träger unter Verwendung einer zweiten CCA belegt, wobei die erste CCA eine CCA mit zufälligem Verzicht ist und die zweite CCA eine Einzelschlitz-CCA ist; wobei eine maximale Kanalbelegungszeit, MCOT ("Maximum Channel Occupancy Time"), der Basisstation auf dem zweiten Träger als gleich der MCOT bestimmt wird, in der die Basisstation aktuell die CCA mit zufälligem Verzicht auf dem ersten Träger durchführt;
ein Empfangsmodul (520), das ausgelegt ist zum Empfangen der ersten Anzeigeinformation von der Basisstation, wobei die erste Anzeigeinformation verwendet wird, um die Endgerätvorrichtung anzuweisen, Aufwärtsverbindungsinformationen an die Basisstation auf dem zweiten Träger in der MCOT zu senden; und
nach dem Empfangsmodul, das ausgelegt ist zum Empfangen der ersten Anzeigeinformation, ein Sendemodul (530), das ausgelegt ist zum Senden der Aufwärtsverbindungsinformationen an die Basisstation auf dem zweiten Träger in der MCOT.

10. Endgerätvorrichtung gemäß Anspruch 9, wobei die MCOT basierend auf einem Wettbewerbs ("Contention") -Fenster der ersten CCA und/oder einer Dienstgüte der Abwärtsverbindung entsprechend der ersten CCA, die durch die Basisstation durchgeführt wird, bestimmt wird.

11. Endgerätvorrichtung gemäß einem der Ansprüche 9 bis 10, wobei das Empfangsmodul ferner ausgelegt ist zum Empfangen der zweiten Anzeigeinformation von der Basisstation; und
das Bestimmungsmodul ferner ausgelegt ist zum Bestimmen eines CCA-Typs der dritten CCA basierend auf der zweiten Anzeigeinformation, wobei der CCA-Typ der dritten CCA eine Einzelschlitz-CCA ist.

12. Computerprogrammprodukt, das Anweisungen umfasst, die, wenn sie von einem mit einer Basisstation verbundenen Computer ausgeführt werden, die Basisstation veranlassen, das Verfahren gemäß einem der Ansprüche 1 bis 3 auszuführen.

13. Computerprogrammprodukt, das Anweisungen umfasst, die, wenn sie von einem mit einer Endgerätvorrichtung verbundenen Computer ausgeführt werden, die Endgerätvorrichtung veranlassen, das Verfahren gemäß einem der Ansprüche 4 bis 5 auszuführen.

## Revendications

1. Procédé de communication sans fil basé sur un spectre sans licence, comprenant :
l'occupation (110), par une station de base, d'une première porteuse sur un spectre sans licence en utilisant une première évaluation de voie libre, CCA, la première CCA étant une CCA avec attente aléatoire ;
l'occupation (120), par la station de base, d'une deuxième porteuse sur le spectre sans licence en utilisant une deuxième CCA, la deuxième CCA étant une CCA à créneau unique ; un temps maximum d'occupation des voies, MCOT, de la station de base sur la deuxième porteuse étant déterminé comme égal au MCOT sur lequel la station de base effectue actuellement la CCA avec attente aléatoire sur la première porteuse ;
l'envoi (130), par la station de base, de premières informations d'indication à un dispositif terminal, les premières informations d'indication étant utilisées pour donner comme consigne au dispositif terminal d'envoyer des informations de liaison montante à la station de base sur la deuxième porteuse au cours du MCOT ; et
après l'envoi des premières informations d'indication, la réception (140), par la station de base sur la deuxième porteuse au cours du MCOT, des informations de liaison montante en provenance du dispositif terminal.

2. Procédé selon la revendication 1, le MCOT étant déterminé d'après une fenêtre de concurrence de la première CCA et/ou un niveau de service de liaison descendante correspondant à la première CCA effectuée par la station de base.

3. Procédé selon l'une quelconque des revendications 1 à 2, le procédé comportant en outre :
l'envoi, par la station de base, de deuxièmes informations d'indication au dispositif terminal, les deuxièmes informations d'indication étant utilisées pour indiquer un type de CCA d'une troisième CCA effectuée par le dispositif terminal sur la deuxième porteuse avant que le dispositif terminal envoie les informations de liaison montante, et le type de CCA de la troisième CCA étant une CCA à créneau unique.

4. Procédé de communication sans fil basé sur un spectre sans licence, comportant :
la détermination (210), par un dispositif terminal, d'une première porteuse et d'une deuxième porteuse qui sont occupées par une station de base sur un spectre sans licence, la station de base occupant la première porteuse en utilisant une première évaluation de voie libre, CCA, et occupant la deuxième porteuse en utilisant une deuxième CCA, la première CCA étant une CCA avec attente aléatoire, et la deuxième CCA étant une CCA à créneau unique ; un temps maximum d'occupation des voies, MCOT, de la station de base sur la deuxième porteuse étant déterminé comme égal au MCOT sur lequel la station de base effectue actuellement la CCA avec attente aléatoire sur la première porteuse ;
la réception (220), par le dispositif terminal, de premières informations d'indication en provenance de la station de base, les premières informations d'indication étant utilisées pour donner comme consigne au dispositif terminal d'envoyer des informations de liaison montante à la station de base sur la deuxième porteuse au cours du MCOT ; et après la réception des premières informations d'indication, l'envoi (230), par le dispositif terminal, des informations de liaison montante à la station de base sur la deuxième porteuse au cours du MCOT.

5. Procédé selon la revendication 4, le procédé comportant en outre :
la réception, par le dispositif terminal, de deuxièmes informations d'indication en provenance de la station de base ; et
la détermination, par le dispositif terminal, d'un type de CCA de la troisième CCA d'après les deuxièmes informations d'indication, le type de CCA de la troisième CCA étant une CCA à créneau unique.

6. Station de base, comprenant :
un module (410) de traitement, configuré pour occuper une première porteuse sur un spectre sans licence en utilisant une première évaluation de voie libre, CCA, la première CCA étant une CCA avec attente aléatoire,
le module (410) de traitement étant en outre configuré pour occuper une deuxième porteuse sur le spectre sans licence en utilisant une deuxième CCA, la deuxième CCA étant une CCA à créneau unique ; un temps maximum d'occupation des voies, MCOT, de la station de base sur la deuxième porteuse étant déterminé comme égal au MCOT sur lequel la station de base effectue actuellement la CCA avec attente aléatoire sur la première porteuse ;
un module (420) d'émission, configuré pour envoyer des premières informations d'indication à un dispositif terminal, les premières informations d'indication étant utilisées pour donner comme consigne au dispositif terminal d'envoyer des informations de liaison montante à la station de base sur la deuxième porteuse au cours du MCOT ; et
après le module d'émission configuré pour envoyer les premières informations d'indication, un module (430) de réception, configuré pour recevoir, sur la deuxième porteuse au cours du MCOT, les informations de liaison montante en provenance du dispositif terminal.

7. Station de base selon la revendication 6, le MCOT étant déterminé d'après une fenêtre de concurrence de la première CCA et/ou un niveau de service de liaison descendante correspondant à la première CCA effectuée par la station de base.

8. Station de base selon l'une quelconque des revendications 6 à 7, le module d'émission étant en outre configuré pour envoyer des deuxièmes informations d'indication au dispositif terminal, les deuxièmes informations d'indication étant utilisées pour indiquer un type de CCA d'une troisième CCA effectuée par le dispositif terminal sur la deuxième porteuse avant que le dispositif terminal envoie les informations de liaison montante, et le type de CCA de la troisième CCA étant une CCA à créneau unique.

9. Dispositif terminal, comprenant :
un module (510) de détermination, configuré pour déterminer une première porteuse et une deuxième porteuse qui sont occupées par une station de base sur un spectre sans licence, la station de base occupant la première porteuse en utilisant une première évaluation de voie libre, CCA, et occupant la deuxième porteuse en utilisant une deuxième CCA, la première CCA étant une CCA avec attente aléatoire, et la deuxième CCA étant une CCA à créneau unique ; un temps maximum d'occupation des voies, MCOT, de la station de base sur la deuxième porteuse étant déterminé comme égal au MCOT sur lequel la station de base effectue actuellement la CCA avec attente aléatoire sur la première porteuse :
un module (520) de réception, configuré pour recevoir des premières informations d'indication en provenance de la station de base, les premières informations d'indication étant utilisées pour donner comme consigne au dispositif terminal d'envoyer des informations de liaison montante à la station de base sur la deuxième porteuse au cours du MCOT ; et
après le module de réception configuré pour recevoir les premières informations d'indication, un module (530) d'émission, configuré pour envoyer les informations de liaison montante à la station de base sur la deuxième porteuse au cours du MCOT.

10. Dispositif terminal selon la revendication 9, le MCOT étant déterminé d'après une fenêtre de concurrence de la première CCA et/ou un niveau de service de liaison descendante correspondant à la première CCA effectuée par la station de base.

11. Dispositif terminal selon l'une quelconque des revendications 9 à 10, le module de réception étant en outre configuré pour recevoir des deuxièmes informations d'indication en provenance de la station de base ; et
le module de détermination étant en outre configuré pour déterminer un type de CCA de la troisième CCA d'après les deuxièmes informations d'indication, le type de CCA de la troisième CCA étant une CCA à créneau unique.

12. Produit de programme informatique comprenant des instructions qui, lorsqu'elles sont exécutées par un ordinateur associé à une station de base, amènent la station de base à réaliser le procédé selon l'une quelconque des revendications 1 à 3.

13. Produit de programme informatique comprenant des instructions qui, lorsqu'elles sont exécutées par un ordinateur associé à un dispositif terminal, amènent le dispositif terminal à réaliser le procédé selon l'une quelconque des revendications 4 à 5.
